(19) Europäisches Patentamt

European Patent Office

Office européen des brevets

(11) **EP 3 785 928 B1**

(12) **EUROPEAN PATENT SPECIFICATION**

(45) Date of publication and mention
of the grant of the patent:
**17.08.2022  Bulletin 2022/33**

(21) Application number: **20182991.8**

(22) Date of filing: **29.06.2020**

(51) International Patent Classification (IPC):
*B60C 1/00* *(2006.01)*    *B60C 11/00* *(2006.01)*
*C08L 7/00* *(2006.01)*    *C08L 9/00* *(2006.01)*

(52) Cooperative Patent Classification (CPC):
(C-Sets available)
**B60C 11/005; B60C 1/0016; C08L 7/00;
C08L 9/00;** B60C 2011/0025; B60C 2011/0033;
C08L 2207/324                                (Cont.)

(54) **TIRES**

REIFEN

PNEUMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2019   JP 2019155713**

(43) Date of publication of application:
**03.03.2021   Bulletin 2021/09**

(73) Proprietor: **Sumitomo Rubber Industries, Ltd.
Kobe-shi, Hyogo 651-0072 (JP)**

(72) Inventors:
• **KOTA, Tomita
Kobe-shi, Hyogo 651-0072 (JP)**
• **IZUMO, Suguru
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 0 592 218     EP-A1- 1 632 364
EP-A1- 3 406 664**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08K 3/36, C08L 9/00, C08L 9/06,
C08L 57/02;
C08L 9/00, C08K 3/36, C08L 7/00, C08L 9/06,
C08L 57/02**

C-Sets

**Description**

TECHNICAL FIELD

The present invention relates to tires.

BACKGROUND ART

Studded tires, which have been used for driving on ice- and snow-covered roads, damage road surfaces and cause dust. In order to solve this environmental problem, studless winter tires have been developed. Since the studless winter tires have no physical projections such as spikes on the tread surface, various studies have been made to ensure properties such as handling stability on ice by improving rubber compounds.

SUMMARY OF INVENTION

TECHNICAL PROBLEM

The present invention aims to solve the problem and provide tires with excellent handling stability on ice and snow.

SOLUTION TO PROBLEM

The present invention relates to a tire, including a cap tread and a base tread,
the tire satisfying the following relationships (1) and (2):

$$0.4 \leqq \frac{Tc}{Tb} \leqq 1.5 \quad (1)$$

wherein Tc represents an average thickness of the cap tread, and Tb represents an average thickness of the base tread, and

$$\frac{\tan \delta c}{E*c} \geqq 0.16 \quad (2)$$

wherein tan δc represents a -30°C tan δ (a loss tangent measured at a temperature of -30°C, an initial strain of 10%, a dynamic strain of 2.5%, and a frequency of 10 Hz) of the cap tread, and E*c represents a 0°C E* (a complex modulus measured at a temperature of 0°C, an initial strain of 10%, a dynamic strain of 2.5%, and a frequency of 10 Hz) of the cap tread.
Preferably, the tire satisfies the following two relationships:

$$0.5 \leqq \frac{Tc}{Tb} \leqq 1.4$$

,

and

$$\frac{\tan \delta c}{E*c} \geqq 0.18$$

Preferably, the tire satisfies the following two relationships:

$$0.9 \leqq \frac{Tc}{Tb} \leqq 1.1 \quad ,$$

and

$$\frac{\tan \delta c}{E*c} \geqq 0.20$$

Preferably, the cap tread is formed from a cap tread rubber composition containing a rubber component and a resin that is solid at room temperature.

Preferably, the rubber component includes an isoprene-based rubber, and the resin includes a terpenic resin.

Preferably, an amount of the isoprene-based rubber based on 100% by mass of the rubber component is more than 40% by mass, and an amount of the resin per 100 parts by mass of the rubber component is 5 parts by mass or more.

Preferably, the tire is a winter tire.

ADVANTAGEOUS EFFECTS OF INVENTION

The tires of the present invention include a cap tread and a base tread and satisfy relationships (1) and (2). Thus, the present invention provides tires with excellent handling stability on ice and snow.

BRIEF DESCRIPTION OF DRAWINGS

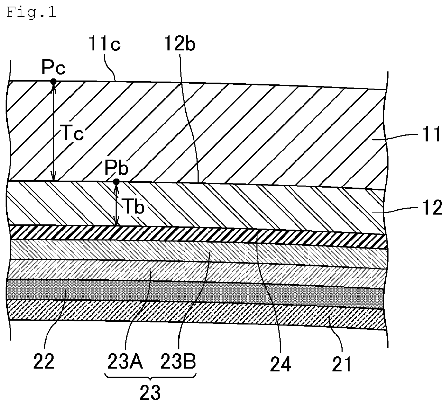

Fig. 1 illustrates an expanded sectional view of a tread portion of a tire.

DESCRIPTION OF EMBODIMENTS

The tires of the present invention include a cap tread and a base tread and satisfy relationships (1) and (2). Thus, tires with excellent handling stability on ice and snow (vehicle handling stability on ice and snow) are provided.

The reason for this effect is not clear but may be explained as follows.

Although the rubber physical properties which correlate with vehicle handling stability on ice and snow have been studied on tires including cap and base treads, such accurate indicators had not been found. The present inventors have first discovered rubber physical property indicators accurately expressing such properties. Specifically, in developing the indicators, the inventors conducted studies on: (1) the tire rubber temperature during actual driving, (2) slip velocity, and (3) the frequency of the road surface irregularities, and found, firstly, that a new indicator of viscoelasticity expressed by "tan $\delta c$ (the -30°C tan $\delta$ of the cap tread)/E*c (the 0°C E* of the cap tread)" correlates with vehicle handling stability on ice and snow.

Then, it was found that a combination of the parameter expressed by the relationship (2): tan $\delta c$ (the - 30°C tan $\delta$ of the cap tread)/E*c (the 0°C E* of the cap tread) $\geq$ 0.16 with the parameter expressed by the relationship (1): 0.4 $\leq$ Tc (the average thickness (mm) of the cap tread)/Tb (the average thickness (mm) of the base tread) $\leq$ 1.5 leads to improved handling stability on ice and snow.

Thus, tires including cap and base treads which satisfy relationships (1) and (2) are excellent in handling stability on ice and snow. Accordingly, the present invention solves the problem (purpose) of handling stability on ice and snow by a tire structure including cap and base treads which satisfy the parameters of relationships (1) and (2). Specifically, these parameters do not define the problem (purpose). The problem to be solved by the invention is handling stability on ice and snow. In order to provide a solution to this problem, a structure combining the parameters (1) and (2) has been devised. In other words, the essential feature is to simultaneously satisfy the two parameters.

Moreover, good dry handling stability and good abrasion resistance can also be imparted to such tires. Additionally, the tires can be produced at lower cost, and thus a reduced production cost can also be attained. Therefore, with the tires, it is possible to improve overall performance in terms of handling stability on ice and snow, dry handling stability, and abrasion resistance and to reduce the production cost.

Relationships (1) and (2) may be satisfied by increasing -30°C tan $\delta$ or reducing 0°C E*. To this end, shifting a temperature dependence curve of tan $\delta$ may be effective. The compatibility of the rubber composition as a whole is important to shift the temperature dependence curve. Examples of such effective techniques include: (i) slightly increasing Tg (glass transition temperature) to increase -30°C tan $\delta$; and (ii) improving dispersion of the rubber compound to reduce E*, while increasing the peak of the temperature dependence curve to improve -30°C tan $\delta$.

The technique (i) may be carried out, specifically, for example, by selecting a resin highly compatible with polymers; or increasing the resin content; or using polymers mainly including a polymer having a high glass transition temperature Tg.

The technique (ii) may be carried out, specifically, for example, by using multiple polymers that are highly compatible; or further increasing the proportion of the main polymer; or selecting a resin highly compatible with polymers; or using a large particle size filler to improve dispersion of the entire system.

More specifically, for winter tires containing NR from the standpoints of tensile strength and plasticity at low temperatures, examples of these techniques include a technique of selecting a terpenic resin as the resin and increasing the proportion of NR relative to the total polymers to reduce the proportion of BR; and a technique of using a filler having a larger particle size. With such techniques, it is possible to efficiently allow the curve to have a shape closer to the ideal shape.

The tires satisfy the following relationship (1):

$$0.4 \leqq \frac{Tc}{Tb} \leqq 1.5 \quad (1)$$

wherein Tc represents the average thickness of the cap tread, and Tb represents the average thickness of the base tread.

When the ratio is not lower than the lower limit, the proportion of the base tread having low plasticity at low temperatures is reduced, so that the tires tend to flexibly conform to ice- and snow-covered road surfaces and maintain good handling stability on ice and snow. When the ratio is not higher than the upper limit, although in the case of winter tires, the cap tread has a low hardness, it maintains block stiffness to reduce block deformation, so that the tires tend to ensure proper contact with ice-and snow-covered road surfaces and maintain good performance on ice and snow. The lower limit is preferably 0.5 or higher, more preferably 0.9 or higher. The upper limit is preferably 1.4 or lower, more preferably 1.1 or lower. Moreover, the lower limit or upper limit of the ratio of the average thickness of the cap tread to the average thickness of the base tread may be 0.5, 1.0, or 1.4.

From the standpoint of abrasion resistance, Tc (the average thickness (mm) of the cap tread) is preferably 3.0 mm or more, more preferably 3.5 mm or more, still more preferably 4.0 mm or more. From the standpoints of dry handling stability and production cost, Tc is also preferably 7.0 mm or less, more preferably 6.5 mm or less, still more preferably 6.0 mm or less. Moreover, the lower limit or upper limit of the average thickness of the cap tread may be 3.3 mm, 5.0 mm, or 5.6 mm.

The average thickness of the cap or base tread (Tc (mm) or Tb (mm)) refers to the average of the thicknesses at points on the cap or base tread surface. Fig. 1 illustrates an expanded sectional view of a tread portion of a tire, showing an exemplary two-layer tread including a cap tread 11 and a base tread 12. In Fig. 1, Pc denotes a point on a cap tread surface 11c, and Pb denotes a point on a base tread surface 12b. The two-way arrow Tc denotes the thickness of the cap tread 11 at the point Pc, and the two-way arrow Tb denotes the thickness of the base tread 12 at the point Pb. The thickness Tc is measured along the normal to the cap tread surface 11c at the point Pc, and the thickness Tb is measured along the normal to the base tread surface 12b at the point Pb.

The tires satisfy the following relationship (2):

$$\frac{\tan \delta c}{E*c} \geqq 0.16 \quad (2)$$

wherein tan $\delta c$ represents the -30°C tan $\delta$ (the loss tangent measured at a temperature of -30°C, an initial strain of 10%, a dynamic strain of 2.5%, and a frequency of 10 Hz) of the cap tread, and E*c represents the 0°C E* (the complex modulus measured at a temperature of 0°C, an initial strain of 10%, a dynamic strain of 2.5%, and a frequency of 10 Hz) of the cap tread.

When the ratio is not lower than the lower limit, good handling stability on ice and snow tends to be obtained. The lower limit is preferably 0.18 or higher, more preferably 0.20 or higher. The upper limit is not limited. It is for example 0.30 or lower, for example 0.27 or lower, or for example 0.25 or lower.

From the standpoint of handling stability on ice and snow, tan $\delta c$ (the -30°C tan $\delta$ of the cap tread) is preferably 0.70 or more, more preferably 0.75 or more, still more preferably 0.80 or more. The upper limit is not limited. It is for example 0.90 or less, for example 0.87 or less, or for example 0.85 or less. Moreover, the lower limit or upper limit of the -30°C tan $\delta$ may be 0.78, 0.79, 0.80, 0.81, 0.82, 0.83, or 0.85.

From the standpoint of handling stability on ice and snow, E*c (the 0°C E* of the cap tread) is preferably 5.5 MPa or less, more preferably 5.0 MPa or less, still more preferably 4.5 MPa or less. The lower limit is not limited. It is for example 2.5 MPa or more, for example 2.7 MPa or more, or for example 3.0 MPa or more. Moreover, the lower limit or upper limit of the 0°C E* may be 4.10, 4.20, 4.30, 4.50, 4.60, or 5.00.

It should be noted that tan δc and E*c [MPa] are determined by viscoelastic testing of the cap tread (vulcanized rubber composition) and base tread (vulcanized rubber composition) taken from the tire.

The tires may have a two-layer tread structure including a cap tread and a base tread or a tread structure with three or more layers further including additional layer(s). The term "cap tread" refers to one of the rubber layers included in the tread portion which is closest to the outermost layer (the side to be in contact with the road when the tire is mounted on a vehicle) of the tread portion and has an average thickness of 1 mm or more. The term "base tread" refers to one of the rubber layers included in the tread portion which is closest to the cord layer inside the tire and has an average thickness of 1 mm or more.

(Chemicals)

The chemicals that may be used in the cap tread (cap tread rubber composition) and the base tread (base tread rubber composition) are described below.

Examples of a rubber component that may be used in the cap or base tread rubber composition include isoprene-based rubbers (polyisoprene rubber (IR), epoxidized polyisoprene rubber, hydrogenated polyisoprene rubber, grafted polyisoprene rubber, natural rubber (NR), deproteinized natural rubber (DPNR), highly purified natural rubber (UPNR), epoxidized natural rubber (ENR), hydrogenated natural rubber (HNR), grafted natural rubber), polybutadiene rubber (BR), styrene-butadiene rubber (SBR), styrene-isoprene-butadiene rubber (SIBR), ethylenepropylene-diene rubber (EPDM), chloroprene rubber (CR), acrylonitrile-butadiene rubber (NBR), and butyl-based rubbers.

These rubbers may be either unmodified or modified. Examples of such modified rubbers include rubbers containing functional groups interactive with fillers. Examples of such functional groups include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Preferred among these are amino (preferably amino whose hydrogen atom is replaced with a C1-C6 alkyl group), alkoxy (preferably C1-C6 alkoxy), alkoxysilyl (preferably C1-C6 alkoxysilyl), and amide groups. The rubber component may consist of a single rubber or a combination of two or more rubbers.

Examples of a silica that may be used in the cap or base tread rubber composition include dry silica (anhydrous silica) and wet silica (hydrous silica). Wet silica is preferred because it contains a large number of silanol groups.

The rubber composition containing silica preferably further contains a silane coupling agent.

The silane coupling agent used in the cap or base tread rubber composition may be any silane coupling agent that is conventionally used in combination with silica in the rubber industry. Non-limiting examples include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from, for example, Degussa, Momentive, Shin-Etsu Silicone, Tokyo Chemical Industry Co., Ltd., AZmax. Co., and Dow Corning Toray Co., Ltd. may be used. These silane coupling agents may be used alone or in combinations of two or more. Among these, sulfide or mercapto silane coupling agents are preferred.

Examples of a carbon black that may be used in the cap or base tread rubber composition include N134, N110, N220, N234, N219, N339, N330, N326, N351, N550, and N762. These may be used alone or in combinations of two or more. Examples of commercial products of the carbon black include products of Asahi Carbon Co., Ltd., Cabot Japan K.K., Tokai Carbon Co., Ltd., Mitsubishi Chemical Corporation, Lion Corporation, NSCC Carbon Co., Ltd, and Columbia Carbon.

Examples of other fillers that may be used in the cap or base tread rubber composition include calcium carbonate, talc, alumina, clay, aluminum hydroxide, and mica.

The cap or base tread rubber composition may contain a resin that is solid at room temperature (25°C) (also referred to as "solid resin").

Examples of the resin include terpenic resins, aromatic vinyl polymers, coumarone-indene resins, indene resins, and rosin-based resins. Commercial products available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Nippon Oil & Energy Corporation, Arakawa Chemical Industries, Ltd., Taoka Chemical Co., Ltd., and Toagosei Co., Ltd. may be used. These resins may be used alone or in combinations of two or more.

Examples of the terpenic resins include polyterpene resins produced by polymerization of terpene compounds, and aromatic modified terpene resins produced by polymerization of terpene compounds and aromatic compounds. Hydrogenated products of the foregoing resins may also be used.

The polyterpene resins refer to resins produced by polymerization of terpene compounds. The terpene compounds refer to hydrocarbons having a composition represented by $(C_5H_8)_n$ and oxygen-containing derivatives thereof, all of which have a terpene backbone and are classified into monoterpenes $(C_{10}H_{16})$, sesquiterpenes $(C_{15}H_{24})$, diterpenes $(C_{20}H_{32})$, and other terpenes. Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Among these, pinene resins are preferred because their polymerization reaction is simple, and they are made from natural pine resin and therefore inexpensive. Pinene resins, which usually contain two isomers, i.e., α-pinene and β-pinene, are classified into β-pinene resins mainly containing β-pinene and α-pinene resins mainly containing α-pinene, depending on the proportions of the components in the resins.

Examples of the aromatic modified terpene resins include terpene phenol resins made from the above-mentioned terpene compounds and phenolic compounds, and terpene styrene resins made from the above-mentioned terpene compounds and styrene compounds. Terpene phenol styrene resins made from the terpene compounds, phenolic compounds, and styrene compounds may also be used. Examples of the phenolic compounds include phenol, bisphenol A, cresol, and xylenol. Examples of the styrene compounds include styrene and α-methylstyrene.

The aromatic vinyl polymers refer to resins produced by polymerization of α-methylstyrene and/or styrene. Examples include styrene homopolymers, α-methylstyrene homopolymers, and copolymers of α-methylstyrene and styrene. Preferred among these are copolymers of α-methylstyrene and styrene.

The coumarone-indene resins refer to resins that contain coumarone and indene as main monomer components forming the skeleton (backbone) of the resins. Examples of monomer components other than coumarone and indene which may be contained in the skeleton include styrene, α-methylstyrene, methylindene, and vinyltoluene.

The indene resins refer to resins that contain indene as a main monomer component forming the skeleton (backbone) of the resins.

The rosin-based resins (rosins) can be classified based on whether they are modified or not, into non-modified rosins (unmodified rosins) and modified rosins (rosin derivatives). Examples of the non-modified rosins include tall rosins (synonym: tall oil rosins), gum rosins, and wood rosins. The modified rosins refer to modified products of non-modified rosins, and examples include disproportionated rosins, polymerized rosins, hydrogenated rosins, and other chemically-modified rosins such as rosin esters, unsaturated carboxylic acid-modified rosins, unsaturated carboxylic acid-modified rosin esters, rosin amide compounds, and rosin amine salts.

Rosin-based resins having a carboxyl content that is not excessively high and an appropriate acid number are preferred. Specifically, the acid number of the rosin-based resins is usually more than 0 mg KOH/g, but is, for example, not more than 200 mg KOH/g, preferably not more than 100 mg KOH/g, more preferably not more than 30 mg KOH/g, still more preferably not more than 10 mg KOH/g.

The acid number can be measured as described later in EXAMPLES. Rosins having an excessively high acid number may be subjected to known esterification processes to reduce the carboxyl content to adjust the acid number to the range indicated above.

The cap or base tread rubber composition may contain a softener such as an oil or a liquid diene polymer (i.e., a softener that is liquid at room temperature (25°C)).

Examples of the oil include process oils, vegetable oils, and mixtures thereof. Examples of the process oils include paraffinic process oils, aromatic process oils, and naphthenic process oils. Examples also include mild extraction solvates (MES), treated distillate aromatic extracts (TDAE), and residual aromatic extracts (S-RAE). Examples of the vegetable oils include castor oil, cottonseed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Examples of commercial products include products of Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., and Fuji Kosan Co., Ltd. These oils may be used alone or in combinations of two or more.

The liquid diene polymer preferably has a polystyrene equivalent weight average molecular weight (Mw) of $1.0 \times 10^3$ to $2.0 \times 10^5$, more preferably $3.0 \times 10^3$ to $1.5 \times 10^4$, as measured by gel permeation chromatography (GPC). When the Mw is not less than the lower limit, good abrasion resistance and good tensile properties tend to be obtained, thereby ensuring sufficient durability. When the Mw is not more than the upper limit, the polymer solution tends to have a good viscosity, leading to excellent productivity.

The Mw of the liquid diene polymer is determined by gel permeation chromatography (GPC) relative to polystyrene standards.

Examples of the liquid diene polymer include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers. The chain end or backbone of these polymers may be modified with polar groups. Among these, liquid IR, liquid SBR, and liquid BR are preferred.

The cap or base tread rubber composition preferably contains sulfur.

Examples of the sulfur include those usually used in the rubber industry, such as powdered sulfur, precipitated sulfur, colloidal sulfur, insoluble sulfur, highly dispersible sulfur, and soluble sulfur. Commercial products available from, for example, Tsurumi Chemical Industry Co., Ltd., Karuizawa Sulfur Co., Ltd., Shikoku Chemicals Corporation, Flexsys, Nippon Kanryu Industry Co., Ltd., and Hosoi Chemical Industry Co., Ltd. may be used.

The cap or base tread rubber composition preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Among these, sulfenamide vulcanization accelerators and/or guanidine vulcanization accelerators are preferred.

The cap or base tread rubber composition may contain other additives such as waxes, antioxidants, stearic acid, zinc oxide, and vulcanizing agents other than sulfur (e.g., organic crosslinking agents).

(Cap tread (cap tread rubber composition))

From the standpoint of tensile strength and plasticity at low temperatures, the rubber component of the cap tread rubber composition preferably includes the isoprene-based rubber and BR, more preferably NR and BR.

The amount of the isoprene-based rubber based on 100% by mass of the rubber component in the cap tread rubber composition is preferably more than 40% by mass. When the amount is not less than the lower limit, the -30°C tan $\delta$ tends to be improved while reducing E*. The lower limit is more preferably 43% by mass or more, still more preferably 45% by mass or more. The upper limit is not limited, but from the standpoint of plasticity at low temperatures, it is preferably 80% by mass or less, more preferably 70% by mass or less, still more preferably 65% by mass or less. Moreover, the lower limit or upper limit of the amount of the isoprene-based rubber may be 45% by mass or 55% by mass.

The BR is preferably, for example, a high-cis polybutadiene rubber. It more preferably has a cis content of 97% by mass or higher. Examples of usable commercial products of the high-cis polybutadiene rubber include BR 1220 available from Zeon Corporation and BR130B and BR150B both available from Ube Industries, Ltd. Herein, the cis content is determined by infrared absorption spectrum analysis.

The amount of the BR based on 100% by mass of the rubber component in the cap tread rubber composition is preferably 20% by mass or more, more preferably 30% by mass or more, still more preferably 40% by mass or more. When the amount is not less than the lower limit, good plasticity at low temperatures tends to be obtained. The upper limit is not limited, but from the standpoint of tensile strength, it is preferably less than 60% by mass, and more preferably 57% by mass or less, still more preferably 55% by mass or less. Moreover, the lower limit or upper limit of the amount of the BR may be 45% by mass or 55% by mass.

From the standpoints of properties such as handling stability on ice and snow, the cap tread rubber composition preferably contains the above-mentioned silica and/or carbon black as filler.

From the standpoints of properties such as handling stability, the amount of the silica per 100 parts by mass of the rubber component in the cap tread rubber composition is preferably 20 parts by mass or more, more preferably 40 parts by mass or more, still more preferably 60 parts by mass or more. From the standpoints of properties such as silica dispersion, the amount is preferably 150 parts by mass or less, more preferably 100 parts by mass or less, still more preferably 80 parts by mass or less. Moreover, the lower limit or upper limit of the amount of the silica may be 65 parts by mass or 70 parts by mass.

From the standpoints of properties such as handling stability, the silica preferably has a nitrogen adsorption specific surface area ($N_2$SA) of 120 $m^2$/g or more, more preferably 150 $m^2$/g or more, still more preferably 165 $m^2$/g or more. From the standpoints of properties such as silica dispersion, the $N_2$SA is preferably less than 200 $m^2$/g, and more preferably 195 $m^2$/g or less, still more preferably 185 $m^2$/g or less. Moreover, the lower limit or upper limit of the $N_2$SA of the silica may be 175 $m^2$/g.

The N$_2$SA of the silica is measured by the BET method in accordance with ASTM D3037-81.

The cap tread rubber composition preferably contains a silane coupling agent in an amount of 1 to 15 parts by mass, more preferably 3 to 10 parts by mass per 100 parts by mass of the silica.

The amount of the carbon black per 100 parts by mass of the rubber component in the cap tread rubber composition is preferably 1 part by mass or more, more preferably 3 parts by mass or more. The upper limit is preferably 30 parts by mass or less, more preferably 15 parts by mass or less, still more preferably 8 parts by mass or less. When the amount is within the range indicated above, good handling stability on ice and snow tends to be obtained. Moreover, the lower limit or upper limit of the amount of the carbon black may be 5 parts by mass or 8 parts by mass.

The carbon black preferably has a nitrogen adsorption specific surface area (N$_2$SA) of 100 m$^2$/g or more, more preferably 130 m$^2$/g or more, but preferably 200 m$^2$/g or less, more preferably 170 m$^2$/g or less, still more preferably 155 m$^2$/g or less. When the N$_2$SA of the carbon black is within the range indicated above, good handling stability on ice and snow tends to be obtained. Moreover, the lower limit or upper limit of the N$_2$SA of the carbon black may be 148 m$^2$/g.

The nitrogen adsorption specific surface area of the carbon black is determined in accordance with JIS K6217-2:2001.

From the standpoint of handling stability on ice and snow, the cap tread rubber composition preferably contains the above-mentioned resin that is solid at room temperature (25°C) (solid resin).

From the standpoints of properties such as handling stability on ice and snow, the amount of the resin per 100 parts by mass of the rubber component in the cap tread rubber composition is preferably 5 parts by mass or more, more preferably 10 parts by mass or more, still more preferably 12 parts by mass or more. From the standpoints of properties such as abrasion resistance, the amount is preferably 50 parts by mass or less, more preferably 40 parts by mass or less, still more preferably 30 parts by mass or less. Moreover, the lower limit or upper limit of the amount of the resin may be 12 parts by mass or 20 parts by mass.

The resin to be used in the cap tread rubber composition may suitably include a terpenic resin as described above.

From the standpoints of properties such as handling stability on ice and snow, the terpenic resin preferably has a softening point of 160°C or lower, more preferably 100 to 140°C, still more preferably 105 to 130°C. Moreover, the lower limit or upper limit of the softening point of the resin may be 115°C or 125°C.

The softening point of the terpenic resin is determined in accordance with JIS K 6220-1:2001 using a ring and ball softening point measuring apparatus and defined as the temperature at which the ball drops down.

From the standpoints of properties such as handling stability on ice and snow, the cap tread rubber composition preferably contains the above-mentioned softener (softener that is liquid at room temperature (25°C)).

In the case where the cap tread rubber composition contains the above-mentioned oil as a softener, the oil is preferably a paraffinic process oil and/or an aromatic process oil.

The amount of the oil per 100 parts by mass of the rubber component in the cap tread rubber composition is preferably 5 parts by mass or more, more preferably 8 parts by mass or more, still more preferably 10 parts by mass or more. The upper limit is preferably 50 parts by mass or less, more preferably 35 parts by mass or less, still more preferably 25 parts by mass or less. When the amount is within the range indicated above, good handling stability on ice and snow tends to be obtained. Moreover, the lower limit or upper limit of the amount of the oil may be 13 parts by mass or 21 parts by mass.

The cap tread rubber composition preferably contains the above-mentioned liquid diene polymer as a softener.

The amount of the liquid diene polymer per 100 parts by mass of the rubber component in the cap tread rubber composition is preferably 1 part by mass or more, more preferably 3 parts by mass or more. The upper limit is preferably 30 parts by mass or less, more preferably 15 parts by mass or less, still more preferably 10 parts by mass or less. When the amount is within the range indicated above, good handling stability on ice and snow tends to be obtained. Moreover, the lower limit or upper limit of the amount of the liquid diene polymer may be 5 parts by mass.

The cap tread rubber composition preferably contains the above-mentioned sulfur.

The amount of the sulfur per 100 parts by mass of the rubber component in the cap tread rubber composition is preferably 0.3 parts by mass or more, more preferably 0.5 parts by mass or more, but is preferably 5.0 parts by mass or less, more preferably 2.0 parts by mass or less, still more preferably 1.5 parts by mass or less. When the amount is within the range indicated above, good handling stability on ice and snow tends to be obtained.

The cap tread rubber composition preferably contains the above-mentioned vulcanization accelerator.

The amount of the vulcanization accelerator per 100 parts by mass of the rubber component in the cap tread rubber composition is preferably 0.3 parts by mass or more, more preferably 1.0 part by mass or more, but is preferably 5.0 parts by mass or less, more preferably 4.0 parts by mass or less. When the amount is within the range indicated above, good handling stability on ice and snow tends to be obtained.

(Base tread (base tread rubber composition))

From the standpoints of properties such as handling stability on ice and snow, the rubber component of the base tread rubber composition preferably includes the above-mentioned isoprene-based rubber and BR, more preferably NR and BR.

The amount of the isoprene-based rubber based on 100% by mass of the rubber component in the base tread rubber composition is preferably 5% by mass or more, more preferably 30% by mass or more, still more preferably 45% by mass or more. The upper limit is preferably 90% by mass or less, more preferably 80% by mass or less, still more preferably 70% by mass or less. When the amount is within the range indicated above, good properties such as handling stability on ice and snow tend to be obtained. Moreover, the lower limit or upper limit of the amount of the isoprene-based rubber may be 70% by mass.

The BR is preferably, for example, a high-cis polybutadiene rubber. The BR preferably has a cis content of 70% by mass or higher, more preferably 90% by mass or higher, still more preferably 97% by mass or higher.

The amount of the BR based on 100% by mass of the rubber component in the base tread rubber composition is preferably 5% by mass or more, more preferably 15% by mass or more, still more preferably 20% by mass or more. The upper limit is preferably 50% by mass or less, more preferably 40% by mass or less, still more preferably 30% by mass or less. When the amount is within the range indicated above, good properties such as handling stability on ice and snow tend to be obtained. Moreover, the lower limit or upper limit of the amount of the BR may be 30% by mass.

From the standpoints of properties such as handling stability on ice and snow, the base tread rubber composition preferably contains the above-mentioned silica and/or carbon black as filler.

The amount of the silica per 100 parts by mass of the rubber component in the base tread rubber composition is preferably 1 part by mass or more, more preferably 3 parts by mass or more, but is preferably 30 parts by mass or less, more preferably 15 parts by mass or less, still more preferably 10 parts by mass or less. When the amount is within the range indicated above, good properties such as handling stability on ice and snow tend to be obtained. Moreover, the lower limit or upper limit of the amount of the silica may be 5 parts by mass.

From the standpoints of properties such as handling stability, the silica preferably has a nitrogen adsorption specific surface area ($N_2SA$) of 120 $m^2$/g or more, more preferably 150 $m^2$/g or more, still more preferably 165 $m^2$/g or more. From the standpoints of properties such as silica dispersion, the $N_2SA$ is preferably less than 200 $m^2$/g, and more preferably 195 $m^2$/g or less, still more preferably 185 $m^2$/g or less. Moreover, the lower limit or upper limit of the $N_2SA$ of the silica may be 175 $m^2$/g.

The $N_2SA$ of the silica is measured by the BET method in accordance with ASTM D3037-81.

The base tread rubber composition preferably contains a silane coupling agent in an amount of 1 to 15 parts by mass, more preferably 3 to 10 parts by mass per 100 parts by mass of the silica.

The amount of the carbon black per 100 parts by mass of the rubber component in the base tread rubber composition is preferably 5 parts by mass or more, more preferably 20 parts by mass or more, still more preferably 30 parts by mass or more. When the amount is not less than the lower limit, good properties such as handling stability on ice and snow tend to be obtained. The upper limit is preferably 100 parts by mass or less, more preferably 70 parts by mass or less, still more preferably 50 parts by mass or less. When the amount is not more than the upper limit, good properties such as dispersibility tend to be obtained. Moreover, the lower limit or upper limit of the amount of the carbon black may be 40 parts by mass.

The carbon black preferably has a nitrogen adsorption specific surface area ($N_2SA$) of 50 $m^2$/g or more, more preferably 80 $m^2$/g or more, still more preferably 100 $m^2$/g or more. When the $N_2SA$ is not less than the lower limit, good properties such as handling stability on ice and snow tend to be obtained. The $N_2SA$ is preferably 150 $m^2$/g or less, more preferably 130 $m^2$/g or less, still more preferably 120 $m^2$/g or less. When the $N_2SA$ is not more than the upper limit, good properties such as dispersibility tend to be obtained.

The nitrogen adsorption specific surface area of the carbon black is determined in accordance with JIS K6217-2:2001. Moreover, the lower limit or upper limit of the $N_2SA$ of the carbon black may be 114 $m^2$/g.

The base tread rubber composition preferably contains the above-mentioned softener (softener that is liquid at room temperature (25°C)).

In the case where the base tread rubber composition contains the above-mentioned oil as a softener, the oil is preferably a paraffinic process oil and/or an aromatic process oil.

The amount of the oil per 100 parts by mass of the rubber component in the base tread rubber composition is preferably 5 parts by mass or more, more preferably 10 parts by mass or more, still more preferably 15 parts by mass or more. The upper limit is preferably 70 parts by mass or less, more preferably 50 parts by mass or less, still more preferably 40 parts by mass or less. Moreover, the lower limit or upper limit of the amount of the oil may be 30 parts by mass. When the amount is within the range indicated above, good handling stability on ice and snow tends to be obtained.

The base tread rubber composition preferably contains the above-mentioned sulfur.

The amount of the sulfur per 100 parts by mass of the rubber component in the base tread rubber composition is preferably 0.3 parts by mass or more, more preferably 1.0 part by mass or more, still more preferably 1.5 parts by mass or more, but is preferably 10.0 parts by mass or less, more preferably 7.0 parts by mass or less, still more preferably 5.0 parts by mass or less. When the amount is within the range indicated above, good handling stability on ice and snow tends to be obtained.

The base tread rubber composition preferably contains the above-mentioned vulcanization accelerator.

The amount of the vulcanization accelerator per 100 parts by mass of the rubber component in the base tread rubber composition is preferably 0.3 parts by mass or more, more preferably 1.0 part by mass or more, but is preferably 5.0 parts by mass or less, more preferably 3.0 parts by mass or less. When the amount is within the range indicated above, good handling stability on ice and snow tends to be obtained.

The cap or base tread rubber composition may be prepared by usual methods. Specifically, for example, it may be prepared by kneading the components in a kneading machine such as a Banbury mixer, a kneader, or an open roll mill, and then vulcanizing the kneaded mixture.

The kneading conditions are as follows. In kneading additives other than vulcanizing agents and vulcanization accelerators (base kneading), the kneading temperature is usually 50 to 200°C, preferably 80 to 190°C, and the kneading time is usually 30 seconds to 30 minutes, preferably 1 to 30 minutes. In kneading vulcanizing agents and vulcanization accelerators (final kneading), the kneading temperature is usually 100°C or lower, preferably from room temperature to 80°C. The resulting kneaded mixture (unvulcanized rubber composition) is usually vulcanized by, for example, press vulcanization. The vulcanization temperature is usually 120 to 200°C, preferably 140 to 180°C.

The tires may be produced from the rubber compositions by usual methods.

Specifically, the unvulcanized rubber compositions containing the components may be extruded into the shape of a cap tread or a base tread and then assembled with other tire components on a tire building machine in a usual manner to build an unvulcanized tire, which may then be heated and pressurized in a vulcanizer to produce a tire.

Examples of the tires include pneumatic tires and airless (solid) tires, preferably pneumatic tires. The tires are suitable especially as winter tires (e.g., studless winter tires, cold weather tires, snow tires, studded tires). The tires may be used as, for example, tires for passenger vehicles, large passenger vehicles, large SUVs, heavy duty vehicles such as trucks and buses, light trucks, or motorcycles, or as racing tires (high performance tires).

EXAMPLES

The present invention will be specifically described below with reference to, but not limited to, examples.

The chemicals used in examples and comparative examples are listed below.

(Materials for cap tread)

NR: TSR
BR: BR-150B (cis content: 97% by mass or higher) available from Ube Industries, Ltd.
Carbon black 1: SHOBLACK N134 ($N_2$SA: 148 m$^2$/g) available from Cabot Japan K.K.
Silica: ULTRASIL VN3 ($N_2$SA: 175 m$^2$/g) available from Evonik
Silane coupling agent: Si69 (bis(3-triethoxysilylpropyl)tetrasulfide) available from Evonik Degussa
Zinc oxide: zinc oxide #2 available from Mitsui Mining & Smelting Co., Ltd.
Stearic acid: stearic acid beads "TSUBAKI" available from NOF Corporation
Antioxidant 6PPD: NOCRAC 6C (N-(1,3-dimethylbutyl)-N-phenyl-p-phenylenediamine) available from Ouchi Shinko Chemical Industrial Co., Ltd.
Aromatic oil: X140 (aromatic oil) available from JXTG Nippon Oil & Energy Corporation
Mineral oil: PS-32 (mineral oil) available from Idemitsu Kosan Co., Ltd.
Liquid diene polymer: RICON100 (liquid SBR, Mw: 5000) available from Sartomer
Terpenic resin 1: YS resin PX1150 (terpene resin, softening point: 115°C) available from Yasuhara Chemical Co., Ltd.
Terpenic resin 2: YS resin PX1250 (terpene resin, softening point: 125°C) available from Yasuhara Chemical Co., Ltd.
Sulfur: powdered sulfur available from Tsurumi Chemical Industry Co., Ltd.
Vulcanization accelerator 1: NOCCELER NS (N-tert-butyl-2-benzothiazolylsulfenamide) available from Ouchi Shinko Chemical Industrial Co., Ltd.
Vulcanization accelerator 2: NOCCELER D (N,N'-diphenylguanidine) available from Ouchi Shinko Chemical Industrial Co., Ltd.

(Materials for base tread)

NR: TSR
BR: BR150B (cis content: 97% by mass or higher) available from Ube Industries, Ltd.
Silica: ULTRASIL VN3 ($N_2SA$: 175 $m^2/g$) available from Evonik
Carbon black 2: DIABLACK I ($N_2SA$: 114 $m^2/g$) available from Mitsubishi Chemical Corporation
Oil (TDAE): Vivatec 500 (TDAE oil) available from H&R
Wax: "SUNNOC Wax" available from Ouchi Shinko Chemical Industrial Co., Ltd.
Stearic acid: stearic acid beads "TSUBAKI" available from NOF Corporation
Antioxidant: NOCRAC 6C (N-(1,3-dimethylbutyl)-N-phenyl-p-phenylenediamine) available from Ouchi Shinko Chemical Industrial Co., Ltd.
Zinc oxide: zinc oxide #2 available from Mitsui Mining & Smelting Co., Ltd.
Sulfur: powdered sulfur available from Tsurumi Chemical Industry Co., Ltd.
Vulcanization accelerator 1: NOCCELER NS (N-tert-butyl-2-benzothiazolylsulfenamide) available from Ouchi Shinko Chemical Industrial Co., Ltd.

<Preparation of cap tread rubber composition (winter tire)>

According to each of the formulations shown in Tables 1 to 6, the materials other than the sulfur and vulcanization accelerators were kneaded using a 1.7 L Banbury mixer (Kobe Steel, Ltd.) at 150°C for five minutes to give a kneaded mixture. To the kneaded mixture were added the sulfur and vulcanization accelerators, and they were kneaded using an open roll mill at 80°C for five minutes to give an unvulcanized rubber composition.

<Preparation of base tread rubber composition (winter tire)>

According to each of the formulations shown in Table 7, the materials other than the sulfur and vulcanization accelerator were kneaded using a 1.7 L Banbury mixer (Kobe Steel, Ltd.) at 150°C for five minutes to give a kneaded mixture. To the kneaded mixture were added the sulfur and vulcanization accelerator, and they were kneaded using an open roll mill at 80°C for five minutes to give an unvulcanized rubber composition.

<Preparation of test tire>

The unvulcanized cap tread rubber composition and the unvulcanized base tread rubber composition were formed into a cap tread and a base tread, respectively, and then assembled with other tire components on a tire building machine to build an unvulcanized tire. The unvulcanized tire was vulcanized at 170°C for 10 minutes to prepare a test tire (a studless winter tire for passenger vehicles, size: 205/70R15).

[Evaluation]

The test tires prepared as above were evaluated as described below. Tables 1 to 6 show the results. Comparative Example 1-1, Comparative Example 2-1, Comparative Example 3-1, Comparative Example 4-1, Comparative Example 5-1, and Comparative Example 6-1 are used as standards of comparison in Table 1, Table 2, Table 3, Table 4, Table 5, and Table 6, respectively.

(Viscoelasticity testing)

Specimens (vulcanized rubber compositions) were taken from the cap tread of each test tire to determine the -30°C tan $\delta$ and 0°C E* using EPLEXOR available from GABO under the following conditions. -30°C tan $\delta$: measured at a temperature of -30°C, an initial strain of 10%, a dynamic strain of 2.5%, and a frequency of 10 Hz 0°C E*: measured at a temperature of 0°C, an initial strain of 10%, a dynamic strain of 2.5%, and a frequency of 10 Hz

<Vehicle handling stability on ice>

The test tires of each example were mounted on a front-engine, rear-wheel-drive car of 2000 cc displacement made in Japan. The performance (handling stability) on ice of the car was evaluated under the following conditions. The testing of the test tires was performed at a temperature on ice of -6 to -1°C at the Nayoro test course of Sumitomo Rubber Industries, Ltd. in Hokkaido, Japan. Vehicle handling performance (subjective evaluation): The starting, acceleration, and stopping of the car were subjectively evaluated. The results are expressed as an index relative to the standard comparative example taken as 100. A higher index indicates better vehicle handling stability on ice.

<Dry handling stability>

The test tires of each example were mounted on each wheel of a front-engine, front-wheel-drive car of 2000 cc displacement made in Japan. A test driver subjectively evaluated dry handling stability on a test course (dry road surface). The results are expressed as an index relative to the standard comparative example taken as 100. A higher index indicates better handling stability on a dry road.

<Abrasion resistance>

The test tires of each example were mounted on a front-engine, front-wheel-drive car of 2000 cc displacement made in Japan. After running 8000 km, the groove depth in the tire tread portion was measured. The distance at which the tire groove depth decreased by 1 mm was calculated from the measured depth and expressed as an index using the equation below.

```
(Abrasion resistance index) = (Distance at which groove
depth of each example decreased by 1 mm)/(Distance at which
tire groove depth of standard comparative example decreased
by 1 mm) × 100
```

A higher index indicates better abrasion resistance.

<Production cost>

The production costs of the test tires are expressed as an index relative to the standard comparative example taken as 100. A higher index indicates a lower production cost.

[Table 1]

Cap tread

|  |  | Comparative Example | Example | | |
|---|---|---|---|---|---|
|  |  | 1-1 | 1-1 | 1-2 | 1-3 |
| Amount (parts by mass) | NR | 40 | 45 | 45 | 55 |
|  | BR | 60 | 55 | 55 | 45 |
|  | Carbon black 1 | 5 | 5 | 5 | 5 |
|  | Silica | 65 | 65 | 65 | 65 |
|  | Silane coupling agent | 5.2 | 5.2 | 5.2 | 5.2 |
|  | Zinc oxide | 2 | 2 | 2 | 2 |
|  | Stearic acid | 1.44 | 1.44 | 1.44 | 1.44 |
|  | Antioxidant | 2.5 | 2.5 | 2.5 | 2.5 |
|  | Aromatic oil | 15 | 15 | 7 | 7 |
|  | Mineral oil | 6 | 6 | 6 | 6 |
|  | Liquid diene polymer | 5 | 5 | 5 | 5 |
|  | Terpenic resin 1 | 12 | 12 | 20 | 20 |
|  | Sulfur | 0.85 | 0.85 | 0.85 | 0.85 |
|  | Vulcanization accelerator 1 | 2 | 2 | 2 | 2 |
|  | Vulcanization accelerator 2 | 1.6 | 1.6 | 1.6 | 1.6 |
| Tire specification | $\tan \delta c / E*c$ | 0.14 | 0.16 | 0.18 | 0.20 |
|  | $\tan \delta c$ | 0.68 | 0.78 | 0.79 | 0.85 |
|  | $E*c$ [Mpa] | 4.9 | 5.0 | 4.3 | 4.3 |
|  | Tc/Tb | 1.0 | 1.0 | 1.0 | 1.0 |
|  | Tc (mm) | 5.0 | 5.0 | 5.0 | 5.0 |
| Evaluation | (a) Vehicle handling stability on ice | 100 | 107 | 110 | 112 |
|  | (b) Dry handling stability | 100 | 99 | 101 | 101 |
|  | (c) Abrasion resistance | 100 | 101 | 100 | 101 |
|  | (d) Production cost | 100 | 102 | 99 | 99 |
|  | Overall performance (= a+b+c+d) | 400 | 409 | 410 | 413 |

[Table 2]

Cap tread

| | | Comparative Example | | Example | | |
|---|---|---|---|---|---|---|
| | | 2-1 | 2-2 | 2-1 | 2-2 | 2-3 |
| Amount (parts by mass) | NR | 40 | 35 | 45 | 45 | 55 |
| | BR | 60 | 65 | 55 | 55 | 45 |
| | Carbon black 1 | 5 | 5 | 5 | 5 | 5 |
| | Silica | 65 | 65 | 65 | 65 | 65 |
| | Silane coupling agent | 5.2 | 5.2 | 5.2 | 5.2 | 5.2 |
| | Zinc oxide | 2 | 2 | 2 | 2 | 2 |
| | Stearic acid | 1.44 | 1.44 | 1.44 | 1.44 | 1.44 |
| | Antioxidant | 2.5 | 2.5 | 2.5 | 2.5 | 2.5 |
| | Aromatic oil | 15 | 17 | 15 | 7 | 7 |
| | Mineral oil | 6 | 6 | 6 | 6 | 6 |
| | Liquid diene polymer | 5 | 5 | 5 | 5 | 5 |
| | Terpenic resin 1 | 12 | 10 | 12 | 20 | 20 |
| | Sulfur | 0.85 | 0.85 | 0.85 | 0.85 | 0.85 |
| | Vulcanization accelerator 1 | 2 | 2 | 2 | 2 | 2 |
| | Vulcanization accelerator 2 | 1.6 | 1.6 | 1.6 | 1.6 | 1.6 |
| Tire specification | $\tan \delta c / E*c$ | 0.14 | 0.13 | 0.16 | 0.18 | 0.20 |
| | $\tan \delta c$ | 0.68 | 0.63 | 0.78 | 0.79 | 0.85 |
| | $E*c$ [Mpa] | 4.9 | 4.8 | 5.0 | 4.3 | 4.3 |
| | Tc/Tb | 0.5 | 0.3 | 0.5 | 0.5 | 0.5 |
| | Tc (mm) | 3.3 | 2.5 | 3.3 | 3.3 | 3.3 |
| Evaluation | (a) Vehicle handling stability on ice | 100 | 99 | 107 | 110 | 112 |
| | (b) Dry handling stability | 100 | 102 | 100 | 99 | 99 |
| | (c) Abrasion resistance | 100 | 97 | 100 | 100 | 101 |
| | (d) Production cost | 100 | 103 | 100 | 97 | 96 |
| | Overall performance (= a+b+c+d) | 400 | 401 | 407 | 406 | 408 |

[Table 3]

Cap tread

| | | Comparative Example | | Example | | |
|---|---|---|---|---|---|---|
| | | 3-1 | 3-2 | 3-1 | 3-2 | 3-3 |
| Amount (parts by mass) | NR | 40 | 35 | 45 | 45 | 55 |
| | BR | 60 | 65 | 55 | 55 | 45 |
| | Carbon black 1 | 5 | 5 | 5 | 5 | 5 |
| | Silica | 65 | 65 | 65 | 65 | 65 |
| | Silane coupling agent | 5.2 | 5.2 | 5.2 | 5.2 | 5.2 |
| | Zinc oxide | 2 | 2 | 2 | 2 | 2 |
| | Stearic acid | 1.44 | 1.44 | 1.44 | 1.44 | 1.44 |
| | Antioxidant | 2.5 | 2.5 | 2.5 | 2.5 | 2.5 |
| | Aromatic oil | 15 | 17 | 15 | 15 | 7 |
| | Mineral oil | 6 | 6 | 6 | 6 | 6 |
| | Liquid diene polymer | 5 | 5 | 5 | 5 | 5 |
| | Terpenic resin 1 | 12 | 10 | 12 | 20 | 20 |
| | Sulfur | 0.85 | 0.85 | 0.85 | 0.85 | 0.85 |
| | Vulcanization accelerator 1 | 2 | 2 | 2 | 2 | 2 |
| | Vulcanization accelerator 2 | 1.6 | 1.6 | 1.6 | 1.6 | 1.6 |
| Tire specification | tan $\delta$c/E*c | 0.14 | 0.13 | 0.16 | 0.18 | 0.20 |
| | tan $\delta$c | 0.68 | 0.63 | 0.78 | 0.79 | 0.85 |
| | E*c [Mpa] | 4.9 | 4.8 | 5.0 | 4.3 | 4.3 |
| | Tc/Tb | 1.4 | 1.6 | 1.4 | 1.4 | 1.4 |
| | Tc (mm) | 5.6 | 6.2 | 5.6 | 5.6 | 5.6 |
| Evaluation | (a) Vehicle handling stability on ice | 100 | 100 | 107 | 110 | 112 |
| | (b) Dry handling stability | 100 | 97 | 100 | 100 | 101 |
| | (c) Abrasion resistance | 100 | 102 | 100 | 100 | 99 |
| | (d) Production cost | 100 | 97 | 100 | 99 | 99 |
| | Overall performance (= a+b+c+d) | 400 | 396 | 407 | 409 | 411 |

[Table 4]

Cap tread

| | | Comparative Example | Example | | |
|---|---|---|---|---|---|
| | | 4-1 | 4-1 | 4-2 | 4-3 |
| Amount (parts by mass) | NR | 40 | 45 | 45 | 55 |
| | BR | 60 | 55 | 55 | 45 |
| | Carbon black 1 | 8 | 8 | 8 | 8 |
| | Silica | 70 | 70 | 70 | 70 |
| | Silane coupling agent | 5.6 | 5.6 | 5.6 | 5.6 |
| | Zinc oxide | 2 | 2 | 2 | 2 |
| | Stearic acid | 1.44 | 1.44 | 1.44 | 1.44 |
| | Antioxidant | 2.5 | 2.5 | 2.5 | 2.5 |
| | Aromatic oil | 15 | 15 | 7 | 7 |
| | Mineral oil | 6 | 6 | 6 | 6 |
| | Liquid diene polymer | 5 | 5 | 5 | 5 |
| | Terpenic resin 2 | 12 | 12 | 20 | 20 |
| | Sulfur | 0.85 | 0.85 | 0.85 | 0.85 |
| | Vulcanization accelerator 1 | 2 | 2 | 2 | 2 |
| | Vulcanization accelerator 2 | 1.6 | 1.6 | 1.6 | 1.6 |
| Tire specification | tan $\delta$c/E*c | 0.14 | 0.16 | 0.18 | 0.20 |
| | tan $\delta$c | 0.78 | 0.80 | 0.81 | 0.82 |
| | E*c [Mpa] | 5.6 | 5.0 | 4.5 | 4.1 |
| | Tc/Tb | 1.0 | 1.0 | 1.0 | 1.0 |
| | Tc (mm) | 5.0 | 5.0 | 5.0 | 5.0 |
| Evaluation | (a) Vehicle handling stability on ice | 100 | 108 | 109 | 111 |
| | (b) Dry handling stability | 100 | 98 | 101 | 101 |
| | (c) Abrasion resistance | 100 | 100 | 99 | 100 |
| | (d) Production cost | 100 | 103 | 100 | 100 |
| | Overall performance (= a+b+c+d) | 400 | 409 | 409 | 412 |

[Table 5]

Cap tread

| | | Comparative Example | | Example | | |
|---|---|---|---|---|---|---|
| | | 5-1 | 5-2 | 5-1 | 5-2 | 5-3 |
| Amount (parts by mass) | NR | 40 | 35 | 45 | 45 | 55 |
| | BR | 60 | 65 | 55 | 55 | 45 |
| | Carbon black 1 | 8 | 8 | 8 | 8 | 8 |
| | Silica | 70 | 70 | 70 | 70 | 70 |
| | Silane coupling agent | 5.6 | 5.6 | 5.6 | 5.6 | 5.6 |
| | Zinc oxide | 2 | 2 | 2 | 2 | 2 |
| | Stearic acid | 1.44 | 1.44 | 1.44 | 1.44 | 1.44 |
| | Antioxidant | 2.5 | 2.5 | 2.5 | 2.5 | 2.5 |
| | Aromatic oil | 15 | 17 | 15 | 7 | 7 |
| | Mineral oil | 6 | 6 | 6 | 6 | 6 |
| | Liquid diene polymer | 5 | 5 | 5 | 5 | 5 |
| | Terpenic resin 2 | 12 | 10 | 12 | 20 | 20 |
| | Sulfur | 0.85 | 0.85 | 0.85 | 0.85 | 0.85 |
| | Vulcanization accelerator 1 | 2 | 2 | 2 | 2 | 2 |
| | Vulcanization accelerator 2 | 1.6 | 1.6 | 1.6 | 1.6 | 1.6 |
| Tire specification | $\tan \delta c / E*c$ | 0.14 | 0.13 | 0.16 | 0.18 | 0.20 |
| | $\tan \delta c$ | 0.78 | 0.70 | 0.80 | 0.82 | 0.83 |
| | $E*c$ [Mpa] | 5.6 | 5.4 | 5.0 | 4.6 | 4.2 |
| | Tc/Tb | 0.5 | 0.3 | 0.5 | 0.5 | 0.5 |
| | Tc (mm) | 3.3 | 2.5 | 3.3 | 3.3 | 3.3 |
| Evaluation | (a) Vehicle handling stability on ice | 100 | 98 | 108 | 111 | 112 |
| | (b) Dry handling stability | 100 | 101 | 100 | 100 | 100 |
| | (c) Abrasion resistance | 100 | 101 | 97 | 98 | 98 |
| | (d) Production cost | 100 | 101 | 101 | 98 | 97 |
| | Overall performance (= a+b+c+d) | 400 | 401 | 406 | 407 | 407 |

[Table 6]

Cap tread

| | | Comparative Example | | Example | | |
|---|---|---|---|---|---|---|
| | | 6-1 | 6-2 | 6-1 | 6-2 | 6-3 |
| Amount (parts by mass) | NR | 40 | 35 | 45 | 45 | 55 |
| | BR | 60 | 65 | 55 | 55 | 45 |
| | Carbon black 1 | 8 | 8 | 8 | 8 | 8 |
| | Silica | 70 | 70 | 70 | 70 | 70 |
| | Silane coupling agent | 5.6 | 5.6 | 5.6 | 5.6 | 5.6 |
| | Zinc oxide | 2 | 2 | 2 | 2 | 2 |
| | Stearic acid | 1.44 | 1.44 | 1.44 | 1.44 | 1.44 |
| | Antioxidant | 2.5 | 2.5 | 2.5 | 2.5 | 2.5 |
| | Aromatic oil | 15 | 17 | 15 | 15 | 7 |
| | Mineral oil | 6 | 6 | 6 | 6 | 6 |
| | Liquid diene polymer | 5 | 5 | 5 | 5 | 5 |
| | Terpenic resin 2 | 12 | 10 | 12 | 20 | 20 |
| | Sulfur | 0.85 | 0.85 | 0.85 | 0.85 | 0.85 |
| | Vulcanization accelerator 1 | 2 | 2 | 2 | 2 | 2 |
| | Vulcanization accelerator 2 | 1.6 | 1.6 | 1.6 | 1.6 | 1.6 |
| Tire specification | tan δc/E*c | 0.14 | 0.13 | 0.16 | 0.18 | 0.20 |
| | tan δc | 0.78 | 0.70 | 0.80 | 0.82 | 0.83 |
| | E*c [Mpa] | 5.6 | 5.4 | 5.0 | 4.6 | 4.2 |
| | Tc/Tb | 1.4 | 1.6 | 1.4 | 1.4 | 1.4 |
| | Tc (mm) | 5.6 | 6.2 | 5.6 | 5.6 | 5.6 |
| Evaluation | (a) Vehicle handling stability on ice | 100 | 99 | 106 | 109 | 112 |
| | (b) Dry handling stability | 100 | 98 | 100 | 99 | 100 |
| | (c) Abrasion resistance | 100 | 101 | 101 | 101 | 99 |
| | (d) Production cost | 100 | 98 | 101 | 100 | 100 |
| | Overall performance (= a+b+c+d) | 400 | 396 | 408 | 409 | 411 |

[Table 7]

Base tread

| | | Formulation |
|---|---|---|
| Amount (parts by mass) | NR | 70 |
| | BR | 30 |
| | Carbon black 2 | 40 |
| | Silica | 5 |
| | Zinc oxide | 3 |
| | Stearic acid | 2 |
| | Antioxidant | 2 |
| | Oil (TDAE) | 30 |
| | Sulfur | 2.5 |
| | Vulcanization accelerator 1 | 2 |

As shown in the tables, the tires of the examples including cap and base treads which satisfy relationships (1) and (2) were excellent in handling stability on ice and snow. Further, the tires were also excellent in overall performance in terms of handling stability on ice and snow, dry handling stability, and abrasion resistance (as shown by the sum of the three indices of handling stability on ice and snow, dry handling stability, and abrasion resistance), as well as production cost (as shown by the sum of the four indices of handling stability on ice and snow, dry handling stability, abrasion resistance, and production cost).

REFERENCE SIGNS LIST

11: cap tread
11c: cap tread surface
Pc: point on cap tread surface 11c
Tc: thickness of cap tread 11 at point Pc
12: base tread
12b: base tread surface
Pb: point on base tread surface 12b
Tb: thickness of base tread 12 at point Pb
21: innerliner
22: carcass
23: belt
23A: inner layer
23B: outer layer
24: band

**Claims**

**1.** A tire, comprising a cap tread and a base tread,

the tire satisfying the following relationships (1) and (2):

$$0.4 \leqq \frac{Tc}{Tb} \leqq 1.5 \quad (1)$$

wherein Tc represents an average thickness of the cap tread, and Tb represents an average thickness of the base tread, and

$$\frac{\tan \delta c}{E*c} \geqq 0.16 \quad (2)$$

wherein tan δc represents a -30°C tan δ (a loss tangent measured at a temperature of -30°C, an initial strain of 10%, a dynamic strain of 2.5%, and a frequency of 10 Hz) of the cap tread, and E*c represents a 0°C E* (a complex modulus measured at a temperature of 0°C, an initial strain of 10%, a dynamic strain of 2.5%, and a frequency of 10 Hz) of the cap tread.

**2.** The tire according to claim 1,
wherein the tire satisfies the following two relationships:

$$0.5 \leqq \frac{Tc}{Tb} \leqq 1.4$$

,

and

$$\frac{\tan \delta c}{E*c} \geqq 0.18$$

**3.** The tire according to claim 1,
wherein the tire satisfies the following two relationships:

$$0.9 \leqq \frac{Tc}{Tb} \leqq 1.1$$

and

$$\frac{\tan \delta c}{E*c} \geqq 0.20$$

**4.** The tire according to any one of claims 1 to 3,
wherein the cap tread is formed from a cap tread rubber composition comprising a rubber component and a resin that is solid at room temperature.

**5.** The tire according to claim 4,
wherein the rubber component comprises an isoprene-based rubber, and the resin comprises a terpenic resin.

**6.** The tire according to claim 5,
wherein an amount of the isoprene-based rubber based on 100% by mass of the rubber component is more than 40% by mass, and
an amount of the resin per 100 parts by mass of the rubber component is 5 parts by mass or more.

**7.** The tire according to any one of claims 1 to 6,
wherein the tire is a winter tire.

**Patentansprüche**

**1.** Reifen, welcher eine Laufflächenkrone und eine Laufflächenbasis umfasst,

wobei der Reifen den folgenden Verhältnissen (1) und (2) genügt:

$$0.4 \leqq \frac{Tc}{Tb} \leqq 1.5 \quad (1)$$

wobei Tc eine mittlere Dicke der Laufflächenkrone darstellt und Tb eine mittlere Dicke der Laufflächenbasis darstellt, und

$$\frac{\tan \delta c}{E*c} \geqq 0.16 \quad (2)$$

wobei tan δc einen -30°C-tan δ (einen bei einer Temperatur von -30°C, einer Anfangsdehnung von 10%, einer dynamischen Dehnung von 2,5% und einer Frequenz von 10 Hz gemessenen Verlusttangens) der Laufflächenkrone darstellt, und E*c einen 0°C-E* (einen bei einer Temperatur von 0°C, einer Anfangsdehnung von 10%, einer dynamischen Dehnung von 2,5% und einer Frequenz von 10 Hz gemessenen komplexen Modul) der Laufflächenkrone darstellt.

2. Reifen nach Anspruch 1, wobei der Reifen die beiden folgenden Verhältnisse erfüllt:

$$0.5 \leqq \frac{Tc}{Tb} \leqq 1.4$$

,

und

$$\frac{\tan \delta c}{E * c} \geqq 0.18$$

.

3. Reifen nach Anspruch 1,
   wobei der Reifen die beiden folgenden Verhältnisse erfüllt:

$$0.9 \leqq \frac{Tc}{Tb} \leqq 1.1$$

, und

$$\frac{\tan \delta c}{E * c} \geqq 0.20$$

4. Reifen nach einem der Ansprüche 1 bis 3,
   wobei die Laufflächenkrone mit einer Laufflächenkronen-Kautschukzusammensetzung gebildet ist, die eine Kautschukkomponente und ein Harz umfasst, das bei Raumtemperatur fest ist.

5. Reifen nach Anspruch 4,
   wobei die Kautschukkomponente einen Isopren-basierten Kautschuk umfasst und das Harz ein Terpenharz umfasst.

6. Reifen nach Anspruch 5,

   wobei eine Menge des Isopren-basierten Kautschuks, bezogen auf 100 Massenprozent der Kautschukkomponente, mehr als 40 Massenprozent beträgt, und
   eine Menge des Harzes pro 100 Massenteile der Kautschukkomponente 5 Massenteile oder mehr beträgt.

7. Reifen nach einem der Ansprüche 1 bis 6,
   wobei der Reifen ein Winterreifen ist.

**Revendications**

1. Pneumatique, comprenant une bande de roulement de chape et une bande de roulement de base,

   le pneumatique satisfaisant les relations (1) et (2) suivantes :

$$0.4 \leqq \frac{Tc}{Tb} \leqq 1.5 \quad (1)$$

   dans laquelle Tc représente une épaisseur moyenne de la bande de roulement de chape et Tb représente une épaisseur moyenne de la bande de roulement de base,
   et

$$\frac{\tan \delta c}{E*c} \geqq 0.16 \quad (2)$$

dans laquelle tan $\partial c$ représente une tan $\partial$ à -30 °C (une tangente de perte mesurée à une température de -30 °C, une contrainte initiale de 10 %, une contraint dynamique de 2,5 % et une fréquence de 10 Hz) de la bande de roulement de chape, et E*c représente un E* à 0 °C (un module complexe mesuré à une température de 0 °C, une contrainte initiale de 10 %, une contrainte dynamique de 2,5 % et une fréquence de 10 Hz) de la bande de roulement de chape.

2. Pneumatique selon la revendication 1,
dans lequel le pneumatique satisfait les deux relations suivantes :

$$0.5 \leqq \frac{Tc}{Tb} \leqq 1.4$$

et

$$\frac{\tan \delta c}{E*c} \geqq 0.18$$

3. Pneumatique selon la revendication 1,
dans lequel le pneumatique satisfait le deux relations suivantes :

$$0.9 \leqq \frac{Tc}{Tb} \leqq 1.1$$

et

$$\frac{\tan \delta c}{E*c} \geqq 0.20$$

4. Pneumatique selon l'une quelconque des revendications 1 à 3, dans lequel la bande de roulement de chape est formée à partir d'une composition de caoutchouc de bande de roulement de chape comprenant un composant de caoutchouc et une résine qui est solide à température ambiante.

5. Pneumatique selon la revendication 4,
dans lequel le composant de caoutchouc comprend un caoutchouc à base d'isoprène et la résine comprend une résine terpénique.

6. Pneumatique selon la revendication 5,

dans lequel une quantité du caoutchouc à base d'isoprène sur la base de 100 % en masse du composant de caoutchouc est de plus de 40 % en masse, et
une quantité de la résine par 100 parties en masse du composant de caoutchouc est de 5 parties en masse ou plus.

7. Pneumatique selon l'une quelconque des revendications 1 à 6, dans lequel le pneumatique est un pneumatique d'hiver.

Fig.1